# EUROPEAN PATENT APPLICATION

(11) **EP 4 708 770 A1**
(43) Date of publication of application: **11.03.2026**
(21) Application number: 24382952.0
(22) Date of filing: 04.09.2024
(51) Int. Cl.: H04L 9/40, H04L 69/22

(54) **METHOD OF AUTHENTICATING A COMMUNICATION PARTNER AND/OR COMMUNICATION CHANNEL, AS WELL AS RESPECTIVE SECURITY PROGRAM, COMPUTER-READABLE DATA CARRIER, SECURITY APPLICATION, USER DEVICE, AND SERVER DEVICE**

(71) Applicant: Giesecke+Devrient Mobile Security Germany GmbH, 81677 München (DE)
(72) Inventor: Rodriguez, Pedro Adrian, E-08820 El Prat de Llobregat (Barcelona) (ES); Marin, Xavier, E-08820 El Prat de Llobregat (Barcelona) (ES)
(74) Representative: LKGLOBAL Partnerschaftsgesellschaft mbB

(57) **Abstract**

A method, a security program (10), a computer-readable data carrier (12), a security application (6), a user device (3), and a server device (4) for authenticating a communication partner and/or communication channel (8), in particular for accessing a data object (D) in communications between a first participant (A) and a second participant (B) as communication partners, are provided, the method comprising the steps of receiving a command message (M) having a command header (L) comprising at least three header fields (N); and identifying at least one command type parameter (P) by information contained in at least two of the at least three header fields (N).

## Description

### Technical Field

The present disclosure relates to the field of securing data and communication. In particular, the present disclosure relates to a of authenticating a communication partner and/or communication channel, in particular for accessing a data object in communications between a first participant and a second participant as communication partners, to a computer-readable data carrier, a security application for securing communications between communication partners, in particular in telecommunication networks, such as the internet, to a user device, in particular a portable data carrier and/or terminal device for secure communications between participants, and to a server device, in particular a security server providing a secure location for securing communications between participants, in particular communication partners in telecommunication networks, such as the internet.

### Background of the Invention

The need for securing data objects against unauthorised access is omnipresent in present private and professional communication environments. Data objects can be and/or comprise any kind of data element or constructs of data, including, but not limited to data gateways, data accesses, data streams, data blocks, data files, or alike, such as binaries, sounds, images, videos, text, emails, documents, images, accounts, folders, etc. According to the state of the art, data objects and communication partners or communication channels for accessing the data objects are commonly protected by authentication objects or security credentials, such as identifiers, authentication certificates, security keys, passwords and/or pins, etc., which can be defined permanently by a user or altered dynamically, for example, as one-time passwords (OTP). Furthermore, biometric features, such as fingerprints, iris scans, natural language recognition, etc., can be used for authenticating a user, for example, for accessing an associated user device.

User devices, such as smart cards (e.g., so-called java cards), identification cards, transaction cards, personal mobile devices, IoT-devices, or other related electronic devices, are known from the prior art. The user devices are commonly configured to employ electronic subscriber profiles authenticating a user for secure transactions or communicating on telecommunication networks, e.g., mobile networks. Such user devices are typically equipped with an electronic/embedded secure element (SE, eSE), also known as tamper resistant element (TRE), which may take the form of an UICC, eUICC, iUICC, SIM, eSIM, iSIM, or alike, configured to store one or more of the electronic subscriber profiles that may allow the user devices to connect to one or more mobile networks.

WO 2019/194428 A1, for example, relates an electronic device and an operating method for the electronic device. The electronic device may comprise: a processor; at least one communication module supporting wireless communication; and a security module having an applet installed therein so as to store and manage a shared key to be transmitted to a first external electronic device and an authentication key used to perform authentication with a second external electronic device, wherein the processor is configured to: receive a request for transmission of the authentication key to the first external electronic device; transmit, to the security module, information for generation of the shared key and a command to generate the shared key; perform control such that the security module generates the shared key on the basis of the information for generation of the shared key; and perform control such that the security module transmit, to the first external electronic device, the generated shared key and information associated with the generated shared key.

WO 2018/129723 A1 describes a management method for a subscription data set, a terminal, and a server. In the method, when a terminal downloads a subscription data set from a subscription management server to an eUICC, the terminal learns of authentication information of a third-party application. When the third-party application requests to execute a management operation with respect to the subscription data set in the eUICC, a subscription data set stored by the terminal is searched for on the basis of a subscription data set identifier returned by a third-party application server. The terminal verifies, on the basis of authentication information of the third-party application stored in the subscription data set, whether the third-party application is provided with a permission to trigger the management operation with respect to the subscription data set in the eUICC. By means of an existing eUICC system architecture in the current terminal, without an additional application module being added, the management of the subscription data set in the eUICC is implemented via the third-party application, and a management portal for the subscription data set in the eUICC is added.

WO 2018/099808 A1 deals with a first device shares with at least one session key with a second device. The first device sends to at least one third device at least one first session key. At least one third device connects directly to the second device by using the at least one first session key. The first device sends to the at least one third device a command for disconnecting from or switching to a non-connected mode with the second device. And the at least one third device disconnects from or switches to a non-connected mode with the second device based upon the received command. The invention also pertains to corresponding first device and system for authenticating to a second device

WO 2010/030362 A1 relates to a system and method for generating an authentication token which is used by an issuer associated with an integrated circuit card to authenticate a transaction. A personal card reader receives data, including an authentication cryptogram, from the integrated circuit card. The personal card reader uses the data received from the integrated circuit card to select one of at least two default bitmaps stored in a memory portion of the personal card reader. The personal card reader uses the selected default bitmap and the authentication cryptogram to build the authentication token.

EP 1 528 451 A1 refers to a smart card authentication framework which may include a card application applet (CAA), an authentication policy applet (APA), and an authentication technology applet (ATA). The CAA may provide a protected service for a user. The APA may provide an authentication-technology-independent user validation service for the CAA. The ATA may provide a technology-specific authentication service. In one embodiment, the CAA provides a first external interface, the ATA provides a second external interface and a first internal interface, and the APA provides a second internal interface. The ATA may receive a host request for user authentication via the second external interface, and the ATA may process the authentication request without participation by the CAA. The CAA may communicate with the APA via the first internal interface to determine whether the user is currently validated. If so, the CAA may provide the protected service for the host via the first external interface.

Methods and systems known from the prior art for securing data objects cannot fully satisfy the needs of modern communication environments. In particular, current authentication processes may be bound or subject to various standards and specifications. For example, for telecommunication environments, such standards and specifications are issued by respective certification and/or standardisation bodies, such as the GMSA, GlobalPlatform (GP), or alike. During development and application of standards and specifications it may be difficult to differentiate between certain commands or respective command messages to be exchanged between communication partners, since the commands and/or command messages may be identified by similar or even the same values. Such difficulties may become even more problematic when various versions or generations of standards and specifications are at hand.

### Summary of the Invention

It may be seen as an object underlying the present invention to provide a way for unequivocally identifying and handling commands or command types used according to certain communication standards and/or specifications. In particular, it may be seen as an object to provide a way to avoid implementation of inappropriate or wrong handling procedures based on faulty identification of commands or command types involved in authenticating communication partners and/or communication channels which may be used between communication participants via public networks, such as the Internet, or in private networks, secure interfaces, or alike. These and further objects are at least partly achieved by the subject-matter of the independent claims.

According to an aspect, a method of authenticating a communication partner and/or communication channel is provided, in particular for accessing a data object in communications between a first participant and a second participant as communication partners, the method comprising the steps of
- receiving a command message having a command header comprising at least three header fields; and
- identifying at least one command type parameter by information contained in at least two of the at least three header fields.

According to an aspect, a security program for securing communications in telecommunication networks, such as the internet, is provided, wherein the security program comprises instructions which, when the security program is executed by a security application, cause the security application to carry out a corresponding method.

According to an aspect, a computer-readable data carrier is provided, having stored thereon a corresponding security program.

According to an aspect, a security application for securing communications between communication partners, in particular in telecommunication networks, such as the internet, is provided, wherein the security application is configured to carry out a corresponding method, comprises a corresponding security program and/or comprises a corresponding computer-readable data carrier.

According to an aspect, a user device, in particular a terminal device for secure communications between participants, for example, as communication partners in telecommunication networks, such as the internet, is provided, wherein the user device is configured to carry out a corresponding method comprises a corresponding security application.

According to an aspect, a server device, in particular a portable data carrier and/or security server providing a secure location for securing communications between participants, for example, communication partners in telecommunication networks, such as the internet, is provided, wherein the server device is configured to carry out a corresponding method and/or comprises a corresponding security application.

The data object can be configured to enable a secure connection and/or restricted access to a respective service. A respective framework can be used for securing any kind of data access, storage or transmission. For example, the command message may be provided in the form of a Smart Card Application Protocol Data Unit (APDU) command. Based on the at least one command type parameter identified, a certain type of the command message at hand may be assessed. In other words, type and/or definition of a command message may be identified based on the at least one command type parameter.

The proposed solution provides a reliable way to properly differentiate between certain commands. The proper distinction particularly enables to fail with correct responses and/or actions when any of the header fields of the command header is wrong. This helps in unequivocally identifying and handling commands or command types used according to certain communication standards and/or specifications across their various versions as well as development and application phases.

Further developments can be derived from the dependent claims and from the following description. Features described with reference to a computing device, such as a user device, and/or server device, and components thereof may be implemented as method steps, or vice versa. Therefore, the description provided in the context of the user device, and/or server device, and their components apply in an analogous manner also to respective methods. In particular, features and functions of the user device, and/or server device, and their components may be implemented as method steps which in turn may be implemented as respective device features or functions.

According to a possible embodiment of the method, the method further comprises the step of distinguishing at least two header fields from each other based on the identified at least one command type parameter. When the at least one command type parameter has been identified, it may be assessed how to handle values included in the header fields of the command message. For example, the command message can be identified based on the correctness of two out of three fields of an APDU header. This helps in unequivocally identifying and handling commands or command types used according to certain communication standards and/or specifications across their various versions as well as development and application phases.

According to a possible embodiment of the method, the method further comprises the step of selecting and/or returning an error code based on the identified at least one command type parameter. In other words, any kind of processing the command message can fail correctly, i.e., with an error code assigned in such a designated to the command in the respective failure. This additionally helps in unequivocally identifying and handling commands or command types used according to certain communication standards and/or specifications across their various versions as well as development and application phases.

According to a possible embodiment of the method, the first participant is a user device associated to a user. The user device can receive the command message from the server device and/or from an external entity. Thereby, the user device may unequivocally identify and handle the received command or command type according to certain communication standards and/or specifications demanded for communication between the user device and the server device and/or external entity.

According to a possible embodiment of the method, the second participant is a server device and/or an external entity. The server device may act as a host in respective communications and may send the command message. The external entity may be another user device and/or an off-card entity (OCE), such as another user device and/or a terminal device such as a smart-card terminal or alike. Thereby, the server device and/or external entity may unequivocally identify and handle the received command or command type according to certain communication standards and/or specifications demanded for communication between the user device and the server device and/or external entity.

According to a possible embodiment of the method, the identified at least one command type parameter relates to an external authentication procedure and/or a mutual authentication procedure. For external authentication, the at least one command type parameter determined may be used to identify a respective external authenticate command. For mutual authentication, the at least one command type parameter may be used to identify a mutual authenticate command. Following procedures and parameters of the respective communication type may then be used as required by respective standards and/or specifications. This may further help to unequivocally identify and handle the received command type according to certain communication standards and/or specifications demanded for communication according to the external authentication procedure and/or mutual authentication procedure, respectively.

According to a possible embodiment of the method, the method further comprises the step of determining and/or identifying a communication host based on the identified at least one command type parameter. The communication host may be a certain server or server type to be contacted based on the at least one command type parameter identified. Communication standards and/or specifications may be chosen based on the identified communication host. This further helps in unequivocally identifying and handling commands or command types used according to certain communication standards and/or specifications across their various versions as well as development and application phases.

According to a possible embodiment of the method, the method further comprises the step of determining at least one security level value indicating a required security level for the communication partner, the communication channel and/or at least one subsequent command exchanged between the communication partners based on the identified at least one command type parameter. In other words, according to the determined command type parameter and/or identified command type, a respective security level for subsequent communications may be chosen. This helps to assure a certain level of security required for respective communications according to certain communication standards and/or specifications across their various versions as well as development and application phases.

According to a possible embodiment of the method, the method further comprises the step of selecting at least one security credential for authenticating the communication partner and/or communication channel based on the identified at least one command type parameter. In other words, according to the determined command type parameter and/or identified command type, a respective authentication object for securing communications may be chosen. This helps to assure a certain level of security required for respective communications according to certain communication standards and/or specifications across their various versions as well as development and application phases.

According to a possible embodiment of the method, the at least one security credential comprises at least one identifier, authentication certificate and/or security key. In other words, the at least one security credential may relate to and/or be provided as a respective authentication object. This further helps to assure a certain level of security required for respective communications according to certain communication standards and/or specifications across their various versions as well as development and application phases.

### Brief Description of the Drawings

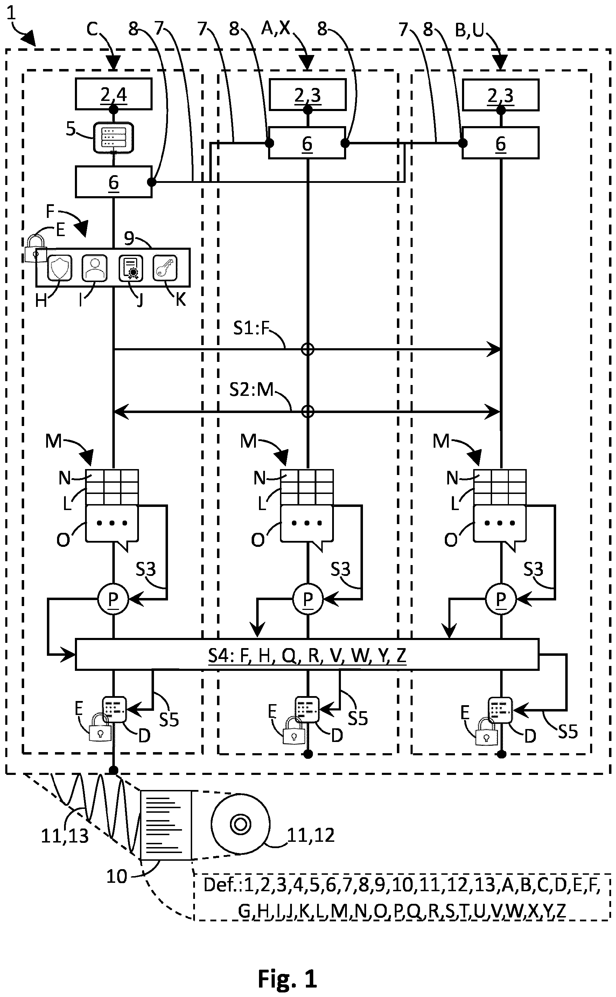

- Fig. 1: is a schematic illustration of a security system configured to carry out a method according to the present invention.

### Detailed Description of Embodiments

The following detailed description is merely exemplary in nature and is not intended to limit the invention and uses of the invention. Furthermore, there is no intention to be bound by any theory presented in the preceding background or the following detailed description. The representations and illustrations in the drawings are schematic and not to scale. Like numerals denote like elements. A greater understanding of the described subject-matter may be obtained through a synoptic review of the illustrations together with a review of the detailed description that follows.

Fig. 1 shows a schematic illustration of a security system 1 configured to carry out a method according to the present invention. The security system 1 involves a first participant A and a second participant B. Furthermore, the security system 1 may involve a trusted entity C. The first participant A, second participant B, and/or trusted entity C may each operate a computing device 2 taking part in and/or as a part of security system 1.

The first participant A and/or the second participant B can each operate the computing device 2 configured as a user device 3, such as a mobile device, terminal device, client device and/or any computing device capable of handling a data object D. The user devices 3 can be associated to a user U and/or to an external entity X The trusted entity C may operate the computing device 2 in the form of a server device 4. The server device 3 of the trusted entity C may comprise a hardware security module 5 which can be configured to store, manage, and/or provide any data element or component described herein.

For example, the first participant A may be an external entity, such as any human and/or machine entity providing certain products and services that demand security and protection, such as banks where the computer devices 2 can be configured as bank severs providing bank accounts, as well as related services involving debit cards, credit cards, involved in financial transactions, or alike, or government services with respective computer devices 2 configured as government servers allowing to set up access to user data involving tax data, contact data, or alike, or health service providers, including health insurance companies, managing and processing health data of the user U the respective computer devices 2 configured as database servers, or alike, etc. The second participant B may be a user U making use of the services of the external entity X by means of the respective user device 3, which may therefore be embodied as a debit card, credit card, mobile phone, personal computer, etc.

The security system 1 further comprises a security application 6 which may run on a secure element (not shown) and may be provided to each of the computing devices 2 and may provide a communication interface 7 enabling communications between the computing devices 2. The security application 6 may be provided in the form of a software plug-in for web browsers and/or email clients, or alike, and therefore can be provided as a locally installed program being executed on the computing devices 2 allowing them to communicate through the communication interface 7 via respective communication channels 8, such as any kind of wired and/or wireless data connections and transmission means (not shown). The communication interface 7 may be provided as a web interface and/or application programming interface (API), or alike.

The trusted entity C may operate a secure database 9 on the server device 4, for example, in and/or protected by the hardware security module 5, protected by respective encryption E. The secure database 9 may provide a secure location to securely keep a security framework G, for example, stored and/or managed in the hardware security module 5. The security framework F may comprise authentication objects H, which may involve, be linked to, and/or comprise identifiers I, such as unique identification codes and/or biometric features, security certificates J, and/or security keys K. The biometric features may comprise any face recognition feature, iris feature, as fingerprint feature, voice recognition feature, or alike.

In any of the embodiments of the security system 1 as described herein, in particular the computing devices 2, can be configured to execute a computer program in the form of a security program 10. A computer-readable data carrier 11 can have stored thereon the security program 10 and may take the form of a computer-readable medium 12 and/or data carrier signal 13. When carrying out the security program 10, the security system 1 and any components thereof communicate as specified in the security program 10. Parameters associated with and/or underlying the security system 1, any of the components thereof and/or any steps S carried out thereby, can be defined in and/or by the security program 10.

A data exchange taking place between the first participant A and the second participant B may have several steps S. In a first step S1, the security framework F along with the respective authentication objects can be provided to the user U and/or external entity X for configuration and/or selection. In a second step S2, a command message M may be sent and/or received, respectively, from each of the communication partners the security system 1, i.e., the first participant A, second participant B, and/or the trusted entity C, for example, by means of the security application 6 and/or communication interface 7, and possibly additionally protected by encryption E through an additional authentication object H. The command message comprises a message header L and a message body O. The message header L comprises a number of header fields N which may each contain a respective value, parameter, description, or alike.

In a third step S3, the respective recipient of the command message M, i.e., the first participant A, second participant B, as all the trusted entity C, identifies at least one command type parameter P by information contained in at least two of at least three of the header fields N. In a fourth step S4, based on the identified command type parameter P, an error code F, authentication object H, subsequent command Q, security level R, security level value V, communication host W, external authentication procedure Y, mutual authentication procedure Z, communication interface 7 and/or communication channel 8 may be assessed, determined, returned, selected and/or used, respectively, as required for further communication between the communication partners, i.e. the first participant A, second participant B, and/or the trusted entity C. In a fifth step S5, the communication partners can access a protected and/or encrypted data object D, for example, via the security application 6 and/or communication interface 7, by using the authentication object H, subsequent command Q, security level R, security level value V, communication host W, external authentication procedure Y, mutual authentication procedure Z, communication interface 7 and/or communication channel 8 as configured and/or required for accessing the data object D.

In the course of the application of the method described herein, in particular in step S3, a distinction can be made between certain commands (cmd), such as, e.g., an External Authenticate cmd (SCP0X) and any Mutual Authenticate cmd (SCP11). In the present example, it may be problematic to distinguish between certain APDU commands, such an External Authenticate command (SCP02 or SCP03) and a Mutual Authenticate command for SCP11 when a secure application 6 supports both protocols. The specifications for a message header L of a command message M embodied as an EXTERNAL AUTHENTICATE command message according to GP Card Specification V2.3.1 (March 2018) Table E-10 would be constructed as shown in the following table (see also GP Card Secure Channel Protocol '03' - Card Specification v2.3 - Amendment D V1.2 (April 2020) Table 7-5):

| **Code** | **Value** | **Meaning** |
|---|---|---|
| CLA | '84' - '87' or 'E0' - 'EF' | See section 11.1.4 |
| INS | '82' | **EXTERNAL** AUTHENTICATE |
| P1 | 'xx' | Security level |
| P2 | '00' | Reference control parameter P2 |
| Lc | '10' | Length of host cryptogram and MAC |
| Data | 'xx xx...' | Host cryptogram and MAC |
| Le | | Not present |

Another message header L of another command message M embodied as an EXTERNAL AUTHENTICATE command message according to GP Card Secure Channel Protocol '03' - Card Specification v2.3 - Amendment D V1.2 (April 2020) Table 7-5 would be constructed as shown in the following table:

| **Code** | **Value** | **Meaning** | |
|---|---|---|---|
| CLA | '84' - '87', 'E0' - 'EF' | See [GPCS] section 11.1.4 | |
| INS | '82' | **EXTERNAL A**UTHENTICATE | |
| P1 | 'xx' | Security level | |
| P2 | '00' | Reference control parameter P2 | |
| Lc | '10' or'20' | Length of host cryptogram and MAC: | |
| | | | - '10' in S8 mode |
| | | | - '20' in S16 mode |
| Data | 'xx xx...' | Host cryptogram and MAC | |
| Le | | Not present | |

A further message header L of further command message M embodied as an MUTUAL AUTHENTICATE command message according to GP Card Secure Channel Protocol '11' - Card Specification 2.3 - Amendment F V1.3 (October 2021) Table 6-16 would be constructed as shown in the following table:

| **Code** | **Value** | **Meaning** |
|---|---|---|
| CLA | '80' - '83' or 'C0' - 'CF' | See [GPCS] section 11.1.4. |
| INS | '82' | MUTUAL AUTHENTICATE |
| P1 | 'xx' | Key Version Number |
| P2 | 'xx' | Key Identifier |
| Lc | 'xx' | Length of data field |
| Data | 'xx xx...' | Data for key establishment |
| Le | '00' | |

These exemplary External Authenticate commands (SCP02 and SCP03) and Mutual Authenticate commands (SCP11) use the same INS value in the message header L, e.g., APDU header, which is '82', and thus could be confused with each other, i.e., not be identified correctly. However, as shown in above tables, the P2 value for any External Authenticate command shall be '00' and the P2 value for any Mutual Authenticate command identifies the KID used during the Secure Channel initialization process, thus allowing for a distinction of the two commands.

For example, there are several test cases in the GP UICC/CIC Compliance tests that try to fail with WRONG P1P2 for an External Authenticate command when the P2 is different than "0". This would not be a problem when the Security Domain processing the APDU does not support the SCP11 protocol, because the received APDU cannot be considered as a possible Mutual Authenticate command. However, it is difficult to differentiate such commands from each other when any Security Domain (SD) supports SCP02 or SCP03 and SCP11 protocols. In this case, a solution as described herein is necessary to know how to process the command messages, in particular, when one of the header fields N, e.g., an APDU header field, is wrong or faulty.

In the present example, there are three header fields N that can be used to differentiate the exemplary two commands when any SD supports these protocols:
- First field: The CLA value by checking the "Secure Messaging bit" because the Mutual Authenticate command does not consider the "Secure Messaging bit" (it is set to 0 instead of 1 like for the External Auth cmd). First, it has to be assessed whether the CLA value is "First Interindustry class byte coding" or "Further Interindustry Class byte Coding" by checking the bit 7 (b7). Therefore, the Secure Messaging bit can be checked depending on the CLA byte, i.e., Bit3 for the "First Interindustry class byte coding" or o Bit6 for the "Further Interindustry class byte coding", respectively.

The following table is an exemplary description of the first industry class CLA Byte Coding:

| **b8** | **b7** | **b6** | **b5(*)** | **b4** | **b3** | **b2** | **b1** | **Meaning** |
|---|---|---|---|---|---|---|---|---|
| 0 | 0 | 0 | 0 | - | - | - | - | Command defined in ISO/IEC 7816 |
| 1 | 0 | 0 | 0 | - | - | - | - | GlobalPlatform command |
| - | 0 | 0 | 0 | 0 | 0 | - | - | No secure messaging |
| - | 0 | 0 | 0 | 0 | 1 | - | - | Secure messaging - GlobalPlatform proprietary |
| - | 0 | 0 | 0 | 1 | 0 | - | - | Secure messaging - ISOIIEC 7816 standard, command header not processed (no C-MAC) |
| - | 0 | 0 | 0 | 1 | 1 | - | - | Secure messaging - ISO/IEC 7816 standard, command header authenticated (C-MAC) |
| - | 0 | 0 | 0 | - | - | X | X | Logical channel number |

The following table is an exemplary description of the further industry class CLA Byte Coding:

| **b8** | **b7** | **b6** | **b5(*)** | **b4** | **b3** | **b2** | **b1** | **Meaning** |
|---|---|---|---|---|---|---|---|---|
| 0 | 1 | - | 0 | - | - | - | - | Command defined in ISO/IEC 7816 |
| 1 | 1 | - | 0 | - | - | - | - | GlobalPlatform command |
| - | 1 | 0 | 0 | - | - | - | - | No secure messaging |
| - | 1 | 1 | 0 | - | - | - | - | Secure messaging - ISO/IEC 7816 or GlobalPlatform proprietary |
| - | 1 | - | 0 | X | X | X | X | Logical channel number |

- Second field: The P2 value. For any External Authenticate command the P2 value should be '00', but for any Mutual Authenticate command the P2 should be different to "0".
- Third field: The Lc value. For any external Authenticate command the Lc value should be '10' (SCP02 or SCP03 for s8 mode) and '20' (for s16 mode in SCP03). The Lc value would be greater than these values for any Mutual Authenticate command because of the command data.

Therefore, the command type parameter, such as SCP02 or SCP03, indicating a respective underlying specification in the present example, and thus, the command type can be identified based on the correctness of two of the three fields in the message header L, e.g., APDU header, and will fail correctly (according to the identified command) when only one header field N is wrong or faulty. Otherwise, if certain commands are not correctly identified, and are thus handled based on false assumptions of the command type at hand, then wrong and/or inappropriate authentication objects H, subsequent commands Q, security levels R, security level values V, communication hosts W, external authentication procedures Y, mutual authentication procedures Z, communication interfaces 7 and/or communication channels 8 could be applied, returned, and/or selected, respectively, thus not only leading to a failure in accessing the data object D, but furthermore potentially not enabling to fail correctly in a way that a failure source could be assessed, and possibly yielding misleading or even inadmissible results.

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It will be understood that various changes may be made in the function and arrangement of elements described in an exemplary embodiment without departing from the scope of the claims.

Additionally, it is noted that "comprising" or "including" does not exclude any other elements or steps and "a" or "an" does not exclude a multitude or plurality. It is further noted that features or steps which are described with reference to one of the above exemplary embodiments may also be used in combination with other features or steps of other exemplary embodiments described above. Reference signs in the claims are not to be construed as a limitation.

### Reference Signs

- 1: security system
- 2: computing device
- 3: user device
- 4: server device
- 5: hardware security module
- 6: security application
- 7: communication interface
- 8: communication channel
- 9: secure database
- 10: computer program / security program
- 11: computer-readable data carrier
- 12: computer-readable medium
- 13: data carrier signal

- A: first participant
- B: second participant
- C: trusted entity
- D: data object
- E: encryption
- F: error code
- G: security framework
- H: authentication object / security credential
- I: identifier / biometric feature
- J: security certificate
- K: security key
- L: message header
- M: command message

- N: header field
- O: message body
- P: command type parameter
- Q: subsequent command
- R: security level
- S: step
- T: transformation function
- U: user
- V: security level value
- W: communication host
- X: external entity
- Y: external authentication procedure
- Z: mutual authentication procedure

- S1: provide framework
- S2: send/receive command
- S3: identify command
- S4: further proceed according to identification
- S5: access data object

## Claims

1. A method of authenticating a communication partner and/or communication channel (8), in particular for accessing a data object (D) in communications between a first participant (A) and a second participant (B) as communication partners, the method comprising the steps of
- receiving a command message (M) having a command header (L) comprising at least three header fields (N); and
- identifying at least one command type parameter (P) by information contained in at least two of the at least three header fields (N).

2. The method according to claim 1, further comprising the step of distinguishing at least two header fields (N) from each other based on the identified at least one command type parameter (P).

3. The method according to claim 1 or 2, further comprising the step of selecting and/or returning an error code (F) based on the identified at least one command type parameter (P).

4. The method according to at least one of claims 1 to 3, wherein the first participant (A) is a user device (3) associated to a user (U).

5. The method according to at least one of claim 1 to 4, wherein the second participant (B) is a server device (3) and/or an external entity (X).

6. The method according to at least one of claims 1 to 5, wherein the identified at least one command type parameter (P) relates to an external authentication procedure (Y) and/or a mutual authentication procedure (Z).

7. The method according to at least one of claims 1 to 6, further comprising the step of determining and/or identifying a communication host (W) based on the identified at least one command type parameter (P).

8. The method according to at least one of claims 1 to 7, further comprising the step of determining at least one security level value (V) indicating a required security level (R) for the communication partner, the communication channel (8) and/or at least one subsequent command (Q) exchanged between the communication partners based on the identified at least one command type parameter (P).

9. The method according to at least one of claims 1 to 8, further comprising the step of selecting at least one security credential (H) for authenticating the communication partner and/or communication channel (8) based on the identified at least one command type parameter (P).

10. The method according to claim 9, wherein the at least one security credential (H) comprises at least one identifier (I), authentication certificate (J) and/or security key (K).

11. Security program (10) for securing communications in telecommunication networks, such as the internet, wherein the security program (10) comprises instructions which, when the security program (10) is executed by a security application (6), cause the security application (6) to carry out a method of at least one of claims 1 to 10.

12. Computer-readable data carrier (12) having stored thereon the security program (11) according to claim 11.

13. Security application (6) for securing communications between communication partners (A, B), in particular in telecommunication networks, such as the internet, wherein the security application (6) is configured to carry out a method of at least one of claims 1 to 10, comprises a security program (10) according to claim 11, and/or comprises a computer-readable data carrier (12) according to claim 12.

14. User device (3), in particular a portable data carrier and/or terminal device for secure communications between participants (A, B), for example, as communication partners in telecommunication networks, such as the internet, wherein the user device (3) is configured to carry out a method according to at least one of claims 1 to 10 and/or comprises a security application (6) according to claim 13.

15. Server device (4), in particular a security server providing a secure location for securing communications between participants (A, B), for example, communication partners in telecommunication networks, such as the internet, wherein the server device (4) is configured to carry out a method according to at least one of claims 1 to 10 and/or comprises a security application (6) according to claim 13.
